# EUROPEAN PATENT APPLICATION

(11) **EP 1 818 313 A1**
(43) Date of publication of application: **15.08.2007**
(21) Application number: 05805388.5
(22) Date of filing: 31.10.2005
(51) Int. Cl.: C01G 55/00, B01D 53/94, B01J 23/58, B01J 23/63, B01J 23/89, B01J 37/08

(54) **METHOD FOR PRODUCING NOBLE METAL-CONTAINING HEAT-RESISTANT OXIDE**

(30) Priority: 05.11.2004 JP 2004322580
(71) Applicant: DAIHATSU MOTOR COMPANY, LTD., Ikeda-shi, Osaka-fu 563-8651 (JP)
(72) Inventor: TANAKA, Hirohisa c/o SHIGA TECHNICAL CENTER of, Ryuo-cho, Gamo-gun, Shiga; (JP); TAN, Isao c/o SHIGA TECHNICAL CENTER of DAIHATSU, Gamo-gun, Shiga; 5202593 (JP); UENISHI, Mari c/o SHIGA TECHNICAL CENTER of, Ryuo-cho, Gamo-gun, Shiga; (JP); TANIGUCHI, Masashi c/o SHIGA TECHNICAL CENTER of, Ryuo-cho, Gamo-gun, Shiga; (JP)
(74) Representative: Schwabe - Sandmair - Marx
(86) International application number: PCT/JP2005/020024
(87) International publication number: WO 2006/049137

(57) **Abstract**

An object of the present invention is to provide a method for producing a noble metal-containing heat-resistant oxide having excellent durability under a high temperature atmosphere. According to the method for producing a noble metal-containing heat-resistant oxide of the present invention, a coordination element material containing coordination elements is blended and the obtained first precursor composition is subjected to a first heat treatment to form a first heat-treated composition (crystal lattice) such as a perovskite-type composite oxide or a fluorite-type composite oxide. Then, a noble metal element material containing a noble metal element such as Pt, Rh or Pd is blended with the first heat-treated composition and the secondary precursor composition thus obtained is subjected to a second heat treatment (baking) at a temperature which is higher than that of the first heat treatment and is 600°C or higher.

## Description

### TECHNICAL FIELD

The present invention relates to a method for producing a noble metal-containing heat-resistant oxide which is preferably used as a catalyst for exhaust gas purification.

### BACKGROUND ART

As catalytic active components for a three-way catalyst which can simultaneously purify carbon monoxide (CO), hydrocarbons (HC) and nitrogen oxides (NOₓ) contained in an exhaust gas, noble metal elements such as Pt (platinum), Rh (rhodium) and Pd (palladium) are widely known.
Conventionally, the noble metal elements have been used in the form supported on the surface of a heat-resistant oxide having a perovskite-type structure, a fluorite-type structure or the like. For example, Patent Document 1 describes a method comprising coprecipitating a nitrate of two or more elements constituting a heat-resistant oxide having a perovskite-type structure and baking the resulting coprecipitate at 800°C, impregnating a carrier powder containing the obtained heat-resistant oxide with an aqueous solution of a nitrate of a noble metal element, and baking the carrier powder at 600°C, thereby supporting the noble metal element on the surface of the heat-resistant oxide.
Patent Document 1 : Japanese Unexamined Patent Publication No. 01-168343

### DISCLOSURE OF THE INVENTION

### Problems to be Solved

However, in the method of merely supporting a noble metal element on the surface of the heat-resistant oxide, there arises a problem that sintering (growth of particles) of the noble metal element is caused by exposure to a high temperature exhaust gas discharged from an automobile engine over a long time and thus dispersibility of the noble metal element decreases and catalytic activity decreases.
Thus, an object of the present invention is to provide a method for producing a noble metal-containing heat-resistant oxide which is excellent in durability under a high temperature atmosphere.

### Solution to the Problems

In order to solve the above problems, the present invention provides:
(1) A method for producing a noble metal-containing heat-resistant oxide containing a coordination element and a noble metal element and is converted into a heat-resistant oxide by heat treatments, which comprises the steps of:
   blending a coordination element material containing the coordination element to prepare a first precursor composition;
   subjecting the first precursor composition to a first heat treatment;
   blending a noble metal element material containing a noble metal element with a first heat-treated composition obtained by the first heat treatment to prepare a second precursor composition; and
   subjecting the second precursor composition to a second heat treatment at a temperature which is higher than that of the first heat treatment and 600°C or higher;
(2) The method for producing a noble metal-containing heat-resistant oxide according to claim 1, wherein the noble metal-containing heat-resistant oxide is a perovskite-type composite oxide represented by the following general formula (1), or a fluorite-type composite oxide represented by the following general formula (2):

   ABM¹O₃ (1)

   (wherein A represents at least one coordination element selected from the group consisting of rare earth elements and alkaline earth metal elements, B represents at least one coordination element selected from the group consisting of transition metal elements (excluding noble metal elements and rare earth elements) and aluminum, and M¹ represents a noble metal element), and

   CDM²O₂ (2)

   (wherein C represents at least one coordination element selected from the group consisting of rare earth elements, alkaline earth metal elements, aluminum and silicon, D represents a transition metal element (excluding noble metal elements and rare earth elements), and M² represents a noble metal element);
(3) The method for producing a noble metal-containing heat-resistant oxide according to claim 1, wherein the step of the first heat treatment is a step of baking the first precursor composition at 200 to 700°C in an atmosphere; and
(4) The method for producing a noble metal-containing heat-resistant oxide according to claim 3, wherein the step of the second heat treatment is a step of baking the second precursor composition in an atmosphere at a temperature which is higher than that of the first heat treatment and is from 600 to 1050°C.

### Effect of the Invention

According to the method for producing a noble metal-containing heat-resistant oxide of the present invention, it is possible to obtain a noble metal-containing heat-resistant oxide having excellent durability under a high temperature atmosphere, which exhibits excellent catalytic activity at relatively lower temperature even after use under a high temperature atmosphere over a long period of time.

### DESCRIPTION OF THE EMBODIMENTS

The method for producing a noble metal-containing heat-resistant oxide of the present invention comprises the steps of blending a coordination element material containing coordination elements to prepare a first precursor composition, subjecting the obtained first precursor composition to a first heat treatment (baking) to prepare a first heat-treated composition (crystal lattice) containing the coordination elements, blending a noble metal element material containing a noble metal with the first heat-treated composition (crystal lattice) obtained by the first heat treatment to prepare a second precursor composition, and subjecting the second heat-treated composition to a second heat treatment (baking) at a temperature which is higher than that of the first heat treatment and 600°C or higher.

In the present invention, examples of the noble metal-containing heat-resistant oxide obtained by subjecting the second precursor composition to the second heat treatment (baking) include a perovskite-type composite oxide represented by the following general formula (1):

ABM¹O₃ (1)

(wherein A represents at least one coordination element selected from the group consisting of rare earth elements and alkaline earth metal elements, B represents at least one coordination element selected from the group consisting of transition metal elements (excluding noble metal elements and rare earth elements) and aluminum, and M¹ represents a noble metal element),
and a fluorite-type composite oxide represented by the following general formula (2):

CDM²O₂ (2)

(wherein C represents at least one coordination element selected from the group consisting of rare earth elements, alkaline earth metal elements, aluminum and silicon, D represents a transition metal element (excluding noble metal elements and rare earth elements), and M² represents a noble metal element).

In the perovskite-type composite oxide, at least one element selected from the group consisting of rare earth elements and alkaline earth metal elements, which corresponds to A in the general formula (1), and at least one element selected from the group consisting of transition metal elements, excluding noble metal elements and rare earth elements, and aluminum, which correspond to B, correspond to the coordination elements constituting the first precursor composition.

Further, in the fluorite-type composite oxide, at least one element selected from the group consisting of rare earth elements, alkaline earth metal elements, aluminum and silicon, which corresponds to C in the general formula (2), and a transition metal element excluding noble metal elements and rare earth elements, which corresponds to D therein, correspond to the coordination elements constituting the first precursor composition.
Examples of the rare earth elements include those with no valence fluctuation other than trivalence such as Sc (scandium), Y (yttrium), La (lanthanum), Nd (neodymium), Pm (promethium), Gd (gadolinium), Dy (dysprosium), Ho (holmium), Er (erbium) and Lu (lutetium), those with valence fluctuation between trivalence and quadrivalence such as Ce (cerium), Pr (praseodymium) and Tb (terbium), and those with valence fluctuation between bivalence and trivalence such as Sm (samarium), Eu (europium), Tm (thulium) and Yb (ytteribium). These rare earth elements may be used alone or in combination. Among these, La, Nd, Y, Ce and Pr are preferable..

Examples of the alkaline earth metal element include Be (beryllium), Mg (magnesium), Ca (calcium), Sr (strontium), Ba (barium), and Ra (radium) . These alkaline earth metals may be used alone or in combination. Among these, Mg, Ca, Sr and Ba are preferable.
Examples of the transition metal elements (excluding noble metal elements and rare earth elements) include elements having atomic numbers of 22 (Ti) to 30 (Zn), atomic numbers of 40 (Zr) to 43 (Tc), an atomic number of 48 (Cd), atomic numbers of 72 (Hf) to 75 (Re), an atomic number of 79 (Au) and an atomic number 80 (Hg) in the periodic table (IUPAC, 1990). These transition metal elements excluding noble metal elements and rare earth elements may be used alone or in combination. Among these, Ti (titanium), Cr (chromium), Mn (manganese) , Fe (iron), Co (cobalt), Ni (nickel), Cu (copper), Zn (zinc) and Zr (zirconium) are preferable.

Examples of noble metal elements corresponding to M¹ in the general formula (1) and M² in the general formula (2) include platinum group elements and Ag (silver).
Examples of the platinum group elements include Ru (ruthenium), Rh (rhodium), Pd (palladium), Os (osmium), Ir (iridium) and Pt (platinum).

These noble metal elements may be used alone or in combination. Among these, Rh, Pd and Pt are preferable.
As the perovskite-type composite oxide, in case where M¹ is Rh, Rh-containing perovskite-type composite oxide represented by the following general formula (11) is preferred:

A'₁₋ₐ, A"ₐB'_{1-b}Rh_{b}O₃ (11)

(wherein A' represents at least one coordination element selected from the group consisting of La, Nd and Y, or at least one coordination element selected from the group consisting of Mg, Ca, Sr and Ba, A" represents Ce and/or Pr, B' represents at least one coordination element selected from the group consisting of Ti, Mn, Fe, Co and Al, a represents an atomic ratio of A" in a numeric range of 0 ≤ a < 0.5, and b represents an atomic ratio of Rh in a numeric rage of 0 < b≤ 0.8).
For example, in case where M¹ is Pd, a Pd-containing perovskite-type composite oxide represented by the following general formula (12) is preferred:

A' B'_{1-c}Pd_{c}O₃ (12)

(wherein A' represents at least one coordination element selected from the group consisting of La, Nd and Y, or at least one coordination element selected from the group consisting of Mg, Ca, Sr and Ba, B' represents at least one coordination element selected from the group consisting of Ti, Mn, Fe, Co and Al, and c represents an atomic ratio of Pd in a numeric range of 0 < c < 0.5).
Further, for example, in case where M¹ is Pt, a Pt-containing perovskite-type composite oxide represented by the following general formula (13) is preferred.

A¹_{1-d}A²_{d}B'_{1-(e+f)}B"ₑPt_{f}O₃ (13)

(wherein A¹ represents at least one coordination element selected from the group consisting of La, Nd and Y, A² represents at least one coordination element selected from the group consisting of Mg, Ca, Sr, Ba and Ag, B' represents at least one coordination element selected from the group consisting of Ti, Mn, Fe, Co and Al, B" represents at least one coordination element selected from the group consisting of Rh and Ru, d represents an atomic ratio of A² in a numeric range of 0 ≤ d ≤ 0.5, e represents an atomic ratio of B" in a numeric rage of 0 ≤ e < 0.5, and f represents an atomic ratio of Pt in a numerical range of 0 < f ≤ 0.5).
As the fluorite-type composite oxide, for example, a zirconia-based composite oxide represented by the following general formula (21), or a cerium-based composite oxide represented by the following general formula (22) are preferred:

Zr_{1-(g+h+x)}Ce_{g}C' ₕM²xO₂₋ᵢ (21)

(wherein C' represents at least one coordination element selected from the group consisting of alkaline earth metal elements and rare earth elements (except for Ce) , M² represents a noble metal element, g represents an atomic ratio of Ce in a numeric range of 0 ≤ g≤ 0.65, h represents an atomic ratio of C' in a numeric range of 0≤ h ≤ 0.55, x represents an atomic ratio of M² in a numeric range of 0 < x ≤ 0. 5, 1- (g+h+x) represents an atomic ratio of Zr in a numeric range of 0.35 ≤ 1-(g+h+x) ≤ 0.9, and i represents an oxygen deficiency amount), and

Ce_{1-(j+k+y)} ZrⱼC"ₖM²_{y}O₂₋ₘ (22)

(wherein C" represents at least one coordination element selected from the group consisting of alkaline earth metal elements and rare earth elements (except for Ce) , M² represents a noble metal element, j represents an atomic ratio of Zr in a numeric range of 0.2 ≤ j ≤ 0.7, k represents an atomic ratio of C" in a numeric range of 0 ≤ k ≤ 0.2, y represents an atomic ratio of M² in a numeric range of 0 < y ≤ 0.5, 1- (j+k+y) represents an atomic ratio of Ce in a numeric range of 0. 3 ≤ 1-(j+k+y) ≤ 0.8, and m represents an oxygen deficiency amount).
In the present invention, a first precursor composition is prepared in an appropriate manner, such as a coprecipitation method, a citrate complex method and an alkoxide method.

In the coprecipitation method, a salt of the above coordination elements, for example, is used as a coordination element material. A first precursor composition, which is a precursor of a heat-resistant oxide having a perovskite-type structure, a fluorite-type structure or the like, is obtained by preparing an aqueous solution of mixed salts that contains a salt of the coordination element in a predetermined stoichiometric ratio, adding a neutralizing agent to the aqueous solution of mixed salts followed by coprecipitation thereof, and drying the resulting coprecipitate.

Examples of a salt of a coordination element include inorganic salts such as sulfate, nitrate, chloride and phosphate, and organic salts such as acetate and oxalate. An aqueous solution of mixed salts is prepared, for example, by adding a salt of each element to water in a proportion satisfying a predetermined stoichiometric ratio followed by mixing with stirring.
Examples of a neutralizing agent include ammonia, organic bases such as amines including triethylamine and pyridine, and inorganic bases such as caustic soda, caustic potash, potassium carbonate and ammonium carbonate. The neutralizing agent is added in an amount that allows pH of a solution to be around 6 to 10 after the neutralizing agent is added.

The obtained coprecipitate is washed with water if necessary, and dried, for example, by vacuum drying or forced-air drying.
In a citrate complex method, for example, a salt of the above coordination elements is used as a coordination element material. A first precursor composition, which is a precursor of the above heat-resistant oxide, is prepared by adding a salt of the coordination element to an aqueous solution of citric acid in an amount that somewhat exceeds the amount in a stoichiometric ratio to the coordination element, to prepare an aqueous solution of citric acid mixed salts, drying it to harden to form a citrate complex of the above coordination element, followed by pre-baking of the resulting citrate complex.

As a salt of the coordination element, those described above are included. The aqueous solution of citric acid mixed salts is prepared by preparing an aqueous solution of mixed salts in the same manner as above and adding an aqueous solution of citric acid to the aqueous solution of mixed salts.
The aqueous solution of a citric acid mixed salts is dried to harden by removing water at a temperature at which a formed citrate complex does not decompose, for example, at around room temperature to 150°C.

Pre-baking of a citrate complex is conducted, for example, by heating it at 250 to 350°C under vacuum or an inert atmosphere.
In an alkoxide method, an alkoxide of the above coordination elements is used as a coordination element material, for example. A first precursor composition, which is a precursor of the above heat-resistant oxide, is obtained by preparing a mixture alkoxide solution containing an alkoxide of the coordination element in an amount of a predetermined stoichiometric ratio, adding water to the mixture alkoxide solution, hydrolyzing it to form a precipitate, and drying the obtained precipitate.

Examples of an alkoxide include alcoholate formed from the above coordination elements and alkoxy such as methoxy, ethoxy, propoxy, isopropoxy and butoxy, and alkoxy alcoholate of the coordination elements represented by the following general formula (3):

E[OCH(R¹)-(CH₂)ₚ-OR²]_{q} (3)

(wherein E represents a coordination element, R¹ represents hydrogen atom or C1-4 alkyl group, R² represents C1-4 alkyl group, p represents an integer of 1 to 3, and q represents an integer of 2 to 4) .
Specific examples of the alkoxy alcoholate include methoxyethylate, methoxypropylate, methoxybutylate, ethoxyethylate, ethoxypropylate, propoxyethylate and butoxyethylate.

A mixed alkoxide solution is prepared, for example, by adding an alkoxide of each coordination element to an organic solvent in an amount that satisfies a predetermined stoichiometric ratio, followed by mixing with stirring. The organic solvent is not specifically limited as long as it can dissolve an alkoxide of each coordination element, but aromatic hydrocarbons, aliphatic hydrocarbons, alcohols, ketones and esters are included. Preferable examples include aromatic hydrocarbons such as benzene, toluene and xylene.

The precipitate obtained above is dried, for example, by vacuum drying and forced-air drying.
In the present invention, a first heat treatment is a step of baking (heat treating) a first precursor composition obtained by the coprecipitation method, the citrate complex method or the alkoxide method, for example, at 200 to 700°C, preferably at 300 to 700°C, and more preferably at 450 to 650°C, in an atmosphere.

By baking a first precursor composition in the first heat treatment, a first heat-treated composition is obtained, which can form a heat-resistant oxide having a perovskite-type structure, a fluorite-type structure or the like.
In the present invention, a second precursor composition is prepared by blending a noble metal element material containing the above noble metal element with the first heat-treated composition obtained by the first heat treatment. Specifically, it is obtained by preparing the noble metal element material such as an aqueous solution of nitrate, a nitric acid aqueous solution of dinitrodiammine and an aqueous solution of chloride containing the noble metal, followed by impregnation of the first heat-treated composition with these aqueous solution.

Specific examples of the noble metal element material include, in case where the noble metal element is Rh, aqueous solutions of rhodium salt such as an aqueous solution of rhodium nitrate and that of rhodium chloride. In the case where the noble metal element is Pd, aqueous solutions of palladium salts such as an aqueous solution of palladium nitrate and that of palladium chloride are included. In the case where the noble metal element is Pt, solutions of platinum salt such as a nitric acid aqueous solution of dinitrodiammine platinum, an aqueous solution of chloroplatinic acid and a platinum tetraammine solution are included.

The impregnation comprises blending the first heat-treated composition with an aqueous solution containing the above noble metal element, such as an aqueous solution of nitrate, a nitric acid aqueous solution of dinitrodiammine and an aqueous solution of chloride, followed by drying.
In the present invention, a second heat treatment is a step of baking (heat treating) a second precursor composition, which is obtained by blending the noble metal element material, at a temperature higher than that in the first heat treatment and also at 600°C or higher, preferably at 650 to 1050°C, and more preferably at 750 to 1000°C in an atmosphere.

When a temperature for the second heat treatment is lower than that for the first heat treatment, as is clear by Examples described hereinafter, durability of a noble metal-containing heat-resistant oxide is failed to improve under a high temperature atmosphere, and when the noble metal-containing heat-resistant oxide is exposed to high temperature atmosphere, such as 800 to 1000°C, over a long period, the catalytic activity decreases.
With regard to a coprecipitate, a citrate complex or a precipitate as a first precursor composition and a first heat-treated composition blended with a noble metal element material as a second precursor composition, the warming treatment temperature or the heat treatment temperature, at which these substances are dried or pre-baked, is commonly less than 600°C. Accordingly, a temperature for a second heat treatment baking the second precursor composition needs to be 600°C or higher regardless of a temperature for a first heat treatment.

When a noble metal-containing heat-resistant oxide obtained by the production method of the present invention is used as a catalyst for exhaust gas purification, it can be used intact in a state that a second precursor composition has been subjected to a second heat treatment (baking), but it can also be modified into proper forms by known methods such as having it supported on a catalyst carrier.
The catalyst carrier is not specifically limited and, for example, known catalyst carriers such as honeycomb monolithic carrier comprising cordierite are used.

In order to support on a catalyst carrier, for example, water is added to the obtained second precursor composition to make a slurry and the slurry is coated on a catalyst carrier, and then dried and heat-treated at 300 to 800°C, and preferably 300 to 600°C.
In case of thus preparing as a catalyst for exhaust gas purification, other known catalytic components (for example, alumina and other known composite oxides supporting a noble metal) and a noble metal-containing heat-resistant oxide obtained by the present invention may be used in combination.

Further, in the production method of a noble metal-containing heat-resistant oxide of the present invention, the first heat-treated composition can be supported on a catalyst carrier before blending a noble metal element material containing a noble metal element with a first heat-treated composition obtained by a first heat treatment.
In order to have the first heat-treated composition supported on a catalyst carrier, water is added to the first heat-treated composition to make a slurry and the slurry is coated on a catalyst carrier, dried, and heat-treated at a temperature lower than in a second heat treatment and also at 200 to 700°C, preferably at 300 to 700°C. The resulting catalyst carrier coated with the first heat-treated composition on its surface is further blended with an aqueous solution such as an aqueous solution of nitrate, a nitric acid aqueous solution of dinitrodiammine and an aqueous solution of chloride which contains the noble metal, dried and second heat-treated to obtain a noble metal-containing heat-resistant oxide.

As a catalyst carrier on which the first heat-treated composition is supported, the same catalyst carriers that support a noble metal-containing heat-resistant oxide of the present invention are included.
A noble metal-containing heat-resistant oxide of the present invention obtained in this manner is excelllent in durability under a high temperature atmosphere, and, as is shown in Examples described hereinafter, exhibits excellent catalytic activity at a relatively lower temperature even after use under a high temperature atmosphere over a long period.

In a description above, main description was provided on the case where a noble metal-containing heat-resistant oxide of the present invention is used as a catalyst for exhaust gas purification. However, the application is not specifically limited and is widely extended in the fields using the noble metals as a catalyst. Examples thereof include a catalyst for coupling reaction, reductive reaction, hydrogenation and hydrocracking in organic synthesis.

### EXAMPLES

The present invention will be illustrated in further detail by way of the following Examples and Comparative Examples, which by no means limit the scope of the present invention.

### <Production of heat-resistant oxide>

### Example 1

Here, 40.6 g (0.100 mol) of lanthanum ethoxyethylate [La(OC₂H₄OEt)₃] and 30.7 g (0.095 mol) of iron ethoxyethylate [Fe (OC₂H₄OEt)₃] were placed in a round bottom flask of 500 mL, added with 200 mL of toluene and stirred to dissolution, to prepare an mixture alkoxide solution. Then, 200 mL of deionized water was added dropwise in the round bottom flask over approximately 15 minutes. A brown, viscous precipitate was formed by hydrolysis. It was then stirred under room temperature for 2 hours, and toluene and water were distilled off under reduced pressure to obtain a LaFe composite oxide (first precursor composition).

The first precursor composition was transferred onto a petri dish. It was subjected to forced-air drying at 60°C for 24 hours, and then heat-treated at 600°C for one hour in an atmosphere by using an electric furnace (first heat treatment) to obtain a blackish brown powder.
Furthermore, the powder was impregnated with 12.1 g (0.53 g in terms of Pd, corresponding to 0.005 mol) of an aqueous solution of palladium nitrate (Pd content of 4.399% by mass) to obtain a second precursor composition. The obtained second precursor composition was dried at 100°C followed by baking at 800°C for one hour (second heat treatment) to obtain a powder of a noble metal-containing heat-resistant oxide.

As a result of X-ray powder diffraction analysis, the noble metal-containing heat-resistant oxide was identified as a single crystal phase comprising a composite oxide having a perovskite-type structure of LaFe_{0.95}Pd_{0.05}O₃. The Pd content in the composite oxide was 2.17% by weight.

### Example 2

Here, 40.7 g (0.100 mol) of lanthanum ethoxyethylate, 18.4 g (0.057 mol) of iron ethoxyethylate and 9.0 g (0. 038 mol) of cobalt ethoxyethylate [Co (OC₂H₄OEt)₂] were placed in a round bottom flask of 500 mL, added with 200 mL of toluene and stirred to dissolution, to prepare a mixed alkoxide solution. Then, 200 mL of deionized water dropwise in the round bottom flask over approximately 15 minutes. A brown, viscous precipitate was formed by hydrolysis. It was then stirred under room temperature for 2 hours, and toluene and water were distilled off under reduced pressure to obtain a LaFeCo composite oxide (first precursor composition).

The first precursor composition was then transferred onto a petri dish. It was subjected to forced-air drying at 60°C for 24 hours, and then heat-treated at 600°C for one hour in an atmosphere by using an electric furnace (first heat treatment) to obtain a blackish brown powder.
Furthermore, the powder was impregnated with 12.1 g (0.53 g in terms of Pd, corresponding to 0.005 mol) of an aqueous solution of palladium nitrate (Pd content of 4.399% by mass) to obtain a second precursor composition. The obtained second precursor composition was baked at 800°C for one hour (second heat treatment) to obtain a powder of a noble metal-containing heat-resistant oxide.

As a result of X-ray powder diffraction analysis, the noble metal-containing heat-resistant oxide was identified as a single crystal phase comprising a composite oxide having a perovskite-type structure of Lafe_{0.57}Co_{0.38}Pd_{0.05}O₃. The Pd content in the composite oxide was 2.16% by weight.

### Example 3

Here, 23.6 g (0.100 mol) of calcium nitrate tetrahydrate [Ca(NO₃)₂]·4H₂O] and 45. 1 g (0.095 mol) of an aqueous solution of titanium chloride (TiCl₄ concentration of 40% by weight (Ti content of 10.1% by mass) were placed in a round bottom flask of 500 mL, and dissolved in 200 mL of deionized water with stirring to prepare an aqueous solution of mixed salts. Then, 200 g (corresponding to 0.50 mol as NaOH) of 10% by weight of caustic soda solution prepared separately was added dropwise to the aqueous solution of mixed salts under room temperature to obtain a coprecipitate. The obtained coprecipitate was mixed with stirring for 2 hours, passed through a filter and fully washed with deionized water.

Water contained in the coprecipitate was distilled off to dryness under reduced pressure to obtain a first precursor composition. The obtained first precursor composition was then heat-treated at 800°C in an atmosphere for 2 hours by using an electric furnace (first heat treatment) to obtain a brown powder.
Furthermore, the powder was impregnated with 11.5 g (0.51 g in terms of Rh, corresponding to 0.005 mol) of an aqueous solution of rhodium nitrate (Rh content of 4.478% by mass) to obtain a second precursor composition. The obtained second precursor composition was dried at 100°C, followed by baking at 1000°C for one hour (second heat treatment) to obtain a powder of a noble metal-containing heat-resistant oxide.

As a result of X-ray powder diffraction analysis, the noble metal-containing heat-resistant oxide was identified as a single crystal phase comprising a composite oxide having a perovskite-type structure of CaTi_{0.95}Rh_{0.05}O₃. The Rh content in the composite oxide was 3.71% by weight.

### Example 4

Here, 23.6 g (0. 100 mol) of calcium nitrate tetrahydrate and 45.1 g (0.095 mol) of an aqueous solution of titanium chloride (TiC1₄ concentration of 40% by weight (Ti content of 10.1% by mass)) were placed in a round bottom flask of 500 mL, and dissolved in 200 mL of deionized water with stirring to prepare an aqueous solution of mixed salts. Then, an aqueous solution of citric acid prepared separately was added thereto, to prepare an aqueous citrate-mixed salt solution.

Water contained in the aqueous citrate-mixed salt solution was distilled off to dryness under reduced pressure to obtain a citrate complex (first precursor composition) . The obtained first precursor composition was then heat-treated at 500°C in an atmosphere for 2 hours by using an electric furnace (first heat treatment) to obtain a brown powder.
Furthermore, the powder was impregnated with 11 . 5 g (0.98 g in terms of Pt, corresponding to 0.005 mol) of a nitric acid aqueous solution of dinitrodiammine platinum (Pt content of 8.50% by mass) to obtain a second precursor composition. The obtained second precursor composition was dried at 100°C, followed by baking at 700°C for one hour (second heat treatment) to obtain a powder of a noble metal-containing heat-resistant oxide.

As a result of X-ray powder diffraction analysis, the noble metal-containing heat-resistant oxide was identified as a single crystal phase comprising a composite oxide having a perovskite-type structure of CaTi_{0.95}Pt_{0.05}O₃. The Pt content in the composite oxide was 6.81% by weight.

### Example 5

Here, 24.2 g (0.075 mol) of zirconium oxychloride (ZrOCl₂·8H₂O) , 6.5 g (0.015 mol) of cerium nitrate (Ce(NO₃)₃-6H₂O), 0.4 g (0.001 mol) of lanthanum nitrate (La(NO₃)₃·6H₂O) and 1.8 g (0.004 mol) of neodymium nitrate (Nd (NO₃)₃·6H₂O) were dissolved in 100 mL of deioni zed water to prepare an aqueous solution of mixed salts. Then, 25.0 g of sodium carbonate (Na₂CO₃) was dissolved in 200 mL of deionized water to prepare a solution of a neutralization coprecipitation agent. The aqueous solution of mixed salts was slowly added dropwise to the solution of a neutralization coprecipitation agent to obtain a coprecipitate.

After the obtained coprecipitate was fully washed with water and passed through a filter, added with 100 mL of isopropyl alcohol, and ground in a commercially available ball mill made of zirconium (3 mol of Y₂O₃, stabilized ZrO₂) for 24 hours. Then, the resulting slurry was passed through a filter and dried at 80°C under vacuum. After drying sufficiently, a first precursor composition was obtained.
After that, the obtained first precursor composition was baked at 600°C in an atmosphere for 3 hours (first heat treatment) to obtain a powder. Furthermore, the powder was impregnated with 11.5 g (0.51 g in terms of Rh, corresponding to 0.005 mol) of an aqueous solution of rhodium nitrate (Rh content of 4.478% by mass) to obtain a second precursor composition. The obtained second precursor composition was dried at 110°C for 12 hours, followed by baking at 800°C for 3 hours (second heat treatment) to obtain a powder of a noble metal-containing heat-resistant oxide.

As a result of X-ray powder diffraction analysis, the noble metal-containing heat-resistant oxide was identified as a single crystal phase comprising a composite oxide having a fluorite-type structure of Zr_{0.75}Ce_{0.15}La_{0.01}Nd_{0.04}Rh_{0.05}O₂. The Rh content in the composite oxide was 3.85% by weight.

### Example 6

Here, 24.2 g (0.075 mol) of zirconium oxychloride was dissolved in 100 mL of deionized water to prepare an aqueous solution of the salt. Then, the aqueous solution of the salt was slowly added dropwise to a solution of a neutralization coprecipitation agent prepared in the same manner as in Example 5 to obtain a coprecipitate.

After the obtained coprecipitate was fully washed with water and passed through a filter, added with 100 mL of isopropyl alcohol, and ground in a commercially available ball mill made of zirconium (3 mol of Y₂O₃, stabilized ZrO₂) for 24 hours. Then, the resulting slurry was passed through a filter and dried at 80°C under vacuum. After drying sufficiently, it was pre-baked at 300°C in an atmosphere for one hour to obtain a powder.
Then, the powder, 6.5 g (0.015 mol) of lanthanum nitrate and 2.2 g (0.005 mol) of neodymium nitrate were dissolved in 100 mL of deionized water to prepare an aqueous solution of mixed salts. Furthermore, the aqueous solution of mixed salts was slowly added dropwise to a solution of a neutralization coprecipitation agent prepared in the same manner as in Example 5 to obtain a coprecipitate.

The obtained coprecipitate was fully washed with water and passed through a filter, added with 100 mL of isopropyl alcohol and ground in a commercially available ball mill made of zirconium (3 mol of Y₂O₃, stabilized ZrO₂) for 24 hours. Then, the resulting slurry was passed through a filter and dried at 80°C under vacuum. After drying sufficiently, a first precursor composition was obtained.
After that, the obtained first precursor composition was baked at 550°C in an atmosphere for 3 hours (first heat treatment) to obtain a powder. Further, 11 . 5 g (0.51 g in terms of Rh, corresponding to 0.005 mol) of an aqueous solution of rhodium nitrate (Rh content of 4.478% by mass) was impregnated in the powder to obtain a second precursor composition. The obtained second precursor composition was dried at 110°C for 12 hours, followed by baking at 850°C for 3 hours (second heat treatment) to obtain a powder of a noble metal-containing heat-resistant oxide.

As a result of X-ray powder diffraction analysis, the noble metal-containing heat-resistant oxide was identified as a single crystal phase comprising a composite oxide having a fluorite-type structure of Zr_{0.75}La_{0.15}Nd_{0.05}Rh_{0.05}O₂. The Rh content in the composite oxide was 3.85% by weight.

### Example 7

Here, 21.7 g (0. 050 mol) of cerium nitrate, 14. 5 g (0. 045 mol) of zirconium oxychloride and 1.1 g (0.003 mol) of yttrium nitrate (Y(NO₃)₃·6H₂O) were dissolved in 100 mL of pure water and uniformly mixed to prepare an aqueous solution of mixed salts. Then, an aqueous solution of citric acid prepared separately was added thereto, and an aqueous citrate-mixed salt solution was prepared. Water contained in the aqueous citrate-mixed salt solution was evaporated to dryness by vacuuming with a rotary evaporator in a water bath at 60 to 80°C, and when the solution become slimy approximately 3 hours later, a temperature of the water bath was slowly raised, followed finally by vacuum drying at 250°C for one hour to obtain a citrate complex (first precursor composition).

Then, the citrate complex was baked at 450°C in an atmosphere for 3 hours (first heat treatment) to obtain a first heat-treated composition. The obtained first heat-treated composition was impregnated with 4.6 g (0.39 g in terms of Pt, corresponding to 0.002 mol) of a nitric acid aqueous solution of dinitrodiammine platinum (8.50% by mass as Pt) to obtain a second precursor composition. The obtained second precursor composition was dried at 100°C, followed by baking at 650°C for one hour (second heat treatment) to obtain a powder of a noble metal-containing heat-resistant oxide.

As a result of X-ray powder diffraction analysis, the noble metal-containing heat-resistant oxide was identified as a single crystal phase comprising a composite oxide having a fluorite-type structure of Ce_{0.50}Zr_{0.45}Y_{0.03}Pt_{0.02}O₂. The Pt content in the composite oxide was 2.60% by weight.

### Comparative Example 1

In the same manner as in Example 2, except for setting a baking temperature in a second heat treatment (second heat treatment temperature) at 450°C, a powder of a noble metal-containing heat-resistant oxide of LaFe_{0.57}CO_{0.38}Pd_{0.05}O₃ was obtained.

### Comparative Example 2

Here, 25.8 g (0.080 mol) of zirconium oxychloride, 6.5 g (0.015 mol) of cerium nitrate, 0. 4 g (0.001 mol) of lanthanum nitrate and 1.8 g (0.004 mol) of neodymium nitrate were dissolved in 100 mL of deionized water to prepare an aqueous solution of mixed salts.

Then, the aqueous solution of mixed salts was slowly titrated into a solution of a neutralization coprecipitation agent prepared in the same manner as in Example 5 to obtain a coprecipitate. The obtained coprecipitate was fully washed with water and passed through a filter, added with 100 mL of isopropyl alcohol and ground in a commercially available ball mill made of zirconium (3 mol of Y₂O₃, stabilized ZrO₂) for 24 hours. Then, the resulting slurry was passed through a filter and vacuum dried at 80°C. After drying sufficiently, a first precursor composition was obtained.

After that, the first precursor composition was baked at 600°C in an atmosphere for 3 hours (first heat treatment) to obtain a powder. Furthermore, the powder was impregnated with 11.5 g (0.51 g in terms of Rh, corresponding to 0.005 mol) of an aqueous solution of rhodium nitrate (Rh content of 4 . 478% by mass) to obtain a second precursor composition. The obtained second precursor composition was dried at 110°C for 12 hours, followed by baking at 350 °C for 3 hours (second heat treatment) to obtain a powder of a noble metal-containing heat-resistant oxide comprising Rh-supporting Rh/Zr_{0.80}Ce_{0.15}La_{0.01}Nd_{0.04}O₂.

### <Performance Evaluation>

### 1) Coating for catalyst carrier

Here, 100 g of each noble metal-containing heat-resistant oxide powder obtained in the Examples and Comparative Examples was mixed with 100 mL of deionized water, and further added with 17.5 g of zirconia sol ("NZS-30B" manufactured by NISSAN CHEMICAL INDUSTRIES LTD., solid content of 30% by mass), and a slurry was prepared. The slurry was coated on a catalyst carrier comprising a cordierite honeycomb (80 mm in diameter, 95 mm in length and 400 cell/ (0. 025 m)² in lattice density) .

After coating, an excessive slurry was blown off by air blow, and the quantity of the coated powder was adjusted to be 157.5 g/l L of catalyst carrier (75.1 g/piece) . Then, it was dried at 120°C by forced-air drying for 12 hours and baked at 600°C in an atmosphere for 3 hours to obtain a monolithic catalyst containing a noble metal-containing heat-resistant oxide (powder) of Examples 1 to 7 and Comparative Examples 1 and 2, respectively.

### 2) Durability test

Each of the monolithic catalysts of Examples 1 to 7 and Comparative Examples 1 and 2 prepared in the above "1) Coating for catalyst carrier" was connected to each of both banks of a V type eight-cylinder gasoline engine of 4L. With the cycle in which the temperature in the catalyst bed was 1,000°C as a single cycle (900 seconds), the cycle was repeated for 5 hours.

In the durability pattern, oxidation was forced under the conditions of A/F = 14.6 (A/F = air to fuel ratio), which is a theoretical air to fuel ratio (λ=1), while providing amplitude of Δλ = ±4% (ΔA/F = ±0.6A/F) by frequency of 0.6 Hz during 0. to 870 seconds (for 870 seconds), and of λ=1.25 during 870 to 900 seconds (for 30 seconds) by introducing two-dimensional air from the upstream side of each catalyst.

### 3) Evaluation of activity

The purification rate of HC was measured on each monolithic catalyst after being subjected to the above "2) Durability test" under the condition of a theoretical air to fuel ratio (λ=1), while providing amplitude of Δλ = ±3.4% (ΔA/F = ±0.5 A/F) by frequency of 1 Hz, by using a straight four-cylinder engine with a volume displacement of 1.5L.
A temperature (°C) was measured when 50% of HC in an exhaust gas was purified by supplying a mixture gas in a stoichiometric state (A/F = 14.6+0.2) to the engine, and raising the temperature of an exhaust gas discharged due to combustion of the mixture gas at a rate of 30°C/minute, and at the same time supplying it to each catalyst.

The results of the measurement are shown in Table 1.

Table 1

**Table 1**

| | Noble Metal-containing Heat-resistant oxide | | | Heat Treatment Temperature (°C) | | Purification Temperature T₅₀ (°C) |
|---|---|---|---|---|---|---|
| | Composition | (Crystal Structure) | Preparation Method | First | Second | |
| Example 1 | LaFe_{0.95}Pd_{0.05}O₃ | (ABM¹O₃-type) | Alkoxide Method | 600 | 800 | 265 |
| Example 2 | LaFe_{0.57}Co_{0.38}Pd_{0.05}O₃ | (ABM¹O₃-type) | Alkoxide Method | 600 | 800 | 276 |
| Example 3 | CaTi_{0.95}Rh_{0.05}O₃ | (ABM¹O₃-tye ) | Coprecipitation Method | 800 | 1000 | 310 |
| Example 4 | CaTi_{0.95}Pt_{0.05}O₃ | (ABM¹O₃-type) | Citric Complex Method | 500 | 700 | 340 |
| Example 5 | Zr_{0.75}Ce_{0.15}La_{0.01}Nd_{0.04}Rh_{0.05}O₂ | (CDM²O₂-type) | Coprecipitation Method | 600 | 800 | 321 |
| Example 6 | Zr_{0.75}La_{0.15}Nd_{0.05}Rh_{0.05}O₂ | (CDM²O₂-type) | Coprecipitation Method | 550 | 850 | 335 |
| Example 7 | Ce_{0.50}Zr_{0.45}Y_{0.03}Pt_{0.02}O₂ | (CDM²O₂-type) | Citric Complex Method | 450 | 650 | 345 |
| Comparative Example 1 | La Fe₀₋₅₇Co₀₋₃₈Pd_{0.05}O₃ | (ABM¹O₃-type) | Alkoxide Method | 600 | 450 | 358 |
| Comparative Example 2 | Rh/ Zr_{0.80}Ce_{0.15}La_{0.01}Nd_{0.04}O₂ | (CDM²O₂-type) | Coprecipitation method | 600 | 350 | 392 |

In the Table 1, ''ABM¹O₃-type'' denotes the crystal structure is a perovskite-type, while "CDM²O₂-type" denotes the crystal structure is a fluorite-type. "First" and "Second" in the column of Heat Treatment Temperature denote a first heat treatment and a second heat treatment, respectively. Further, "Purification Temperature" denotes a temperature T₅₀(°C) at which 50% of hydrocarbon (HC) is purified.

### <Production of a heat-resistant oxide>

### Example 8

Here, 43.3 g (0.100 mol) of lanthanum nitrate and 38.4 g (0.095 mol) of iron nitrate (Fe(NO₃)₂·9H₂O) were placed in a round bottomed flask of 500 mL, added with 200 mL of deionized water and stirred to dissolution to prepare an aqueous solution of mixed salts.

Then, 200 g (corresponding to 0.50 mol as NaOH) of 10% by weight solution of caustic soda separately prepared was added dropwise to the aqueous solution of mixed salts under room temperature to obtain a coprecipitate. The obtained coprecipitate was mixed with stirring for 2 hours, filtered and fully washed with water.
Water was distilled off to dryness under reduced pressure to obtain a first precursor composition. It was then heat-treated at 600°C for 2 hours in an electric furnace (first heat treatment) and a brown powder was obtained.

Furthermore, water was added to the powder to make a slurry, which was then coated on a catalyst carrier (cordierite monolith) and baked at 500°C (baking after coat treatment).
Then, the catalyst carrier coated with LaFe was impregnated with 12.1 g (0.53 g in terms of Pd, corresponding to 0.005 mol) of an aqueous solution of palladium nitrate (Pd content of 4.399% by weight) and baked at 800°C (second heat treatment) to obtain a catalyst carrier coated with a noble metal-containing heat-resistant oxide on its surface.

As a result of X-ray powder diffraction analysis, the noble metal-containing heat-resistant oxide was identified as a single crystal phase comprising a composite oxide having a perovskite-type structure of LaFe_{0.95}Pd_{0.05}O₃.

### Example 9

In the same manner as in Example 8, except that a baking temperature in a second heat treatment (second heat treatment temperature) was 650°C, a catalyst carrier whose surface was coated with a noble metal-containing heat-resistant oxide comprising a perovskite-type crystal structure of LaFe_{0.95}Pd_{0.05}O₃ was obtained.

### Comparative Example 3

In the same manner as in Example 8, except that a baking temperature in a second heat treatment (second heat treatment temperature) was 450°C, a catalyst carrier whose surface was coated with a noble metal-containing heat-resistant oxide comprising a perovskite-type crystal structure of LaFe_{0.95}Pd_{0.05}O₃ was obtained.

### Comparative Example 4

In the same manner as in Example 8, except that a baking temperature in a second heat treatment (second heat treatment temperature) was 250°C, a catalyst carrier whose surface was coated with a noble metal-containing heat-resistant oxide comprising a perovskite-type crystal structure of LaFe_{0.95}Pd_{0.05}O₃ was obtained.

### <Performance Evaluation>

### i) Durability test

Each of the catalyst carriers (monolithic catalysts) supporting a noble metal-containing heat-resistant oxide of Examples 8 and 9 and Comparative Examples 3 and 4 was connected to each of both banks of a V type eight-cylinder engine of 4L. With the cycle in which the temperature in the catalyst bed was 900°C as a single cycle (900 seconds), the cycle was repeated for 100 hours for endurance test.

In the durability pattern, oxidation was forced under the conditions of A/F = 14.6, which is a theoretical air to fuel ratio (λ = 1), while providing amplitude of Δλ = ±4% (ΔA/F = ±0.6A/F) by frequency of 1.0 Hz during 0 to 870 seconds (for 870 seconds), and of A/F = 17.5 during 870 to 900 seconds (for 30 seconds) by introducing two-dimensional air from the upstream side of each catalyst.

### ii) Evaluation of activity

The purification rate of HC was measured on each monolithic catalyst after being subjected to the durability test in above i) under the condition of a theoretical air to fuel ratio (λ = 1), while providing amplitude of Δλ = ±3. 4% (ΔA/F =±0.5 A/F) by frequency of 1 Hz, by using a straight 4 cylinder engine with a volume displacement of 1.5 L.

A temperature (°C) was measured at which 50% of HC in an exhaust gas was purified by supplying a mixture gas in a stoichiometric state (A/F=14.6±0.2) to the engine, and raising the temperature of an exhaust gas discharged due to combustion of the mixture gas at a rate of 30°C/minute, and at the same time supplying it to each catalyst.
The result of the measurement is shown in Table 2.

Table 2

**Table 2**

| | Noble Metal-containing Heat-resistant oxide | | | Heat Treatment Temperature (°C) | | | Purification Temperature T₅₀ (°C) |
|---|---|---|---|---|---|---|---|
| | Composition | (Crystal Structure) | Preparation Method | First | After Coat | Second | |
| Example 8 | Lafe_{0.05}Bd_{0.05}O₃ | (ABM¹O3- type) | Coprecipitation Method | 600 | 500 | 800 | 254 |
| Example 9 | LaFe_{0.95}Pd_{0.05}O₃ | (ABM¹O₃-type) | Coprecipitation Method | 600 | 500 | 650 | 265 |
| Comparative Example 3 | LaFe_{0.95}Pd_{0.05}O₃ | (ABM¹O₃-type) | Coprecipitation Method | 600 | 500 | 450 | 335 |
| Comparative Example 4 | LaFe_{0.95}Pd_{0.05}O₃ | (ABM¹O₃-type) | Coprecipitation Method | 600 | 500 | 250 | 353 |

In the Table 2, "ABM¹O₃-type" denotes the crystal structure is a perovskite-type. "First", "After Coat" and "Second" in the column of Heat Treatment Temperature denote a first heat treatment, a heat treatment after coating a first precursor composition on a catalyst carrier, and a second heat treatment, respectively. Further, "Purification Temperature" denotes a temperature T₅₀ (°C) at which 50% of hydrocarbon (HC) is purified.

As shown in Table 1 and 2, a noble metal-containing heat-resistant oxides of Examples 1 to 9 make it possible to exhibit excellent catalytic activity at relatively lower temperature even after being subjected to a durability test.
While the illustrative embodiments as examples of the present invention are provided in the above description, they are for illustrative purpose only and not to be construed restrictively. Modification and variation of the present invention which will be obvious to those skilled in the art are to be covered in the following claims.

### INDUSTRIAL APPLICABILITY

The method for producing a noble metal-containing heat-resistant oxide of the present invention is preferable as a method for obtaining a noble metal-containing heat-resistant oxide that is excelllent in durability under a high temperature atmosphere and exhibits excellent catalytic activity at relatively lower temperature.
In addition, the noble metal-containing heat-resistant oxides obtained by the production method of the present invention are preferably applied to such fields as a coupling reaction catalyst, reductive reaction catalyst, hydrogenation catalyst and hydrocracking catalyst in organic syntheses.

## Claims

1. A method for producing a noble metal-containing heat-resistant oxide containing a coordination element and a noble metal element and is converted into a heat-resistant oxide by heat treatments, which comprises the steps of:
blending a coordination element material containing the coordination element to prepare a first precursor composition;
subjecting the first precursor composition to a first heat treatment;
blending a noble metal element material containing a noble metal element with a first heat-treated composition obtained by the first heat treatment to prepare a second precursor composition; and
subjecting the second precursor composition to a second heat treatment at a temperature which is higher than that of the first heat treatment and 600°C or higher.

2. The method for producing a noble metal-containing heat-resistant oxide according to claim 1, wherein the noble metal-containing heat-resistant oxide is a perovskite-type composite oxide represented by a following general formula (1), or a fluorite-type composite oxide represented by a following general formula (2):
ABM¹O₃ (1)
(wherein A represents at least one coordination element selected from the group consisting of rare earth elements and alkaline earth metal elements, B represents at least one coordination element selected from the group consisting of transition metal elements (excluding noble metal elements and rare earth elements) and aluminum, and M¹ represents a noble metal element), and
CDM²O₂ (2)
(wherein C represents at least one coordination element selected from the group consisting of rare earth elements, alkaline earth metal elements, aluminum and silicon, D represents a transition metal element (excluding noble metal elements and rare earth elements), and M² represents a noble metal element).

3. The method for producing a noble metal-containing heat-resistant oxide according to claim 1, wherein the step of the first heat treatment is a step of baking the first precursor composition at 200 to 700°C in an atmosphere.

4. The method for producing a noble metal-containing heat-resistant oxide according to claim 3, wherein the step of the second heat treatment is a step of baking the second precursor composition in an atmosphere at a temperature which is higher than that of the first heat treatment and is from 600 to 1050°C.
